# EUROPEAN PATENT APPLICATION

(11) **EP 4 593 479 A1**
(43) Date of publication of application: **30.07.2025**
(21) Application number: 23868651.3
(22) Date of filing: 22.09.2023
(51) Int. Cl.: H04W 56/00, H04W 8/00, H04W 72/25, H04W 4/40, H04W 92/18

(54) **SYNCHRONIZATION METHOD IN SIDELINK COMMUNICATION**

(30) Priority: 23.09.2022 US 202263409228 P
(71) Applicant: LG Electronics Inc., Yeongdeungpo-gu Seoul 07336 (KR)
(72) Inventor: HWANG, Jinyup, Seoul 06772 (KR); YANG, Yoonoh, Seoul 06772 (KR); LEE, Sangwook, Seoul 06772 (KR); HUH, Joongkwan, Seoul 06772 (KR); PARK, Jinwoong, Seoul 06772 (KR); NA, Yunsik, Seoul 06772 (KR)
(74) Representative: Frenkel, Matthias Alexander
(86) International application number: PCT/KR2023/014491
(87) International publication number: WO 2024/063599

(57) **Abstract**

One embodiment of the present disclosure provides a method by which a UE performs communication. The method comprises the steps of: transmitting a first sidelink synchronization signal (SLSS) in a sidelink synchronization signal block (S-SSB) periodicity section; and searching for a synchronization reference (SyncRef) UE, wherein the step of searching for the reference UE comprises a step of receiving a second SLSS from the reference UE in a reception section, and on the basis of the S-SSB periodicity section and the reception section overlapping, the UE skips transmitting the first SLSS in the periodicity section..

## Description

### TECHNICAL FIELD

The present specification relates to mobile communications.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

### DISCLOSURE

### TECHNICAL PROBLEM

The synchronization method is problematic in sidelink communication.

### TECHNICAL SOLUTION

To receive SLSS from a reference UE, the UE may drop the SLSS transmission.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of UE to which implementations of the present disclosure is applied.
FIG. 4 is a diagram showing an example of a communication structure that can be provided in a 6G system.
FIG. 5 shows an example of an electromagnetic spectrum.
FIG. 6 shows an example of subframe types in NR.
FIG. 7 is an exemplary diagram illustrating an example of an SS block in NR.
FIG. 8 is an exemplary diagram illustrating an example of beam sweeping in NR.
FIG. 9 is an example diagram showing an example of a SyncRef UE having 8 Tx beams.
FIG. 10 is an exemplary diagram illustrating an example of an embodiment of the present specification.
FIG. 11 shows the procedure of the UE for the disclosure of this specification.

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

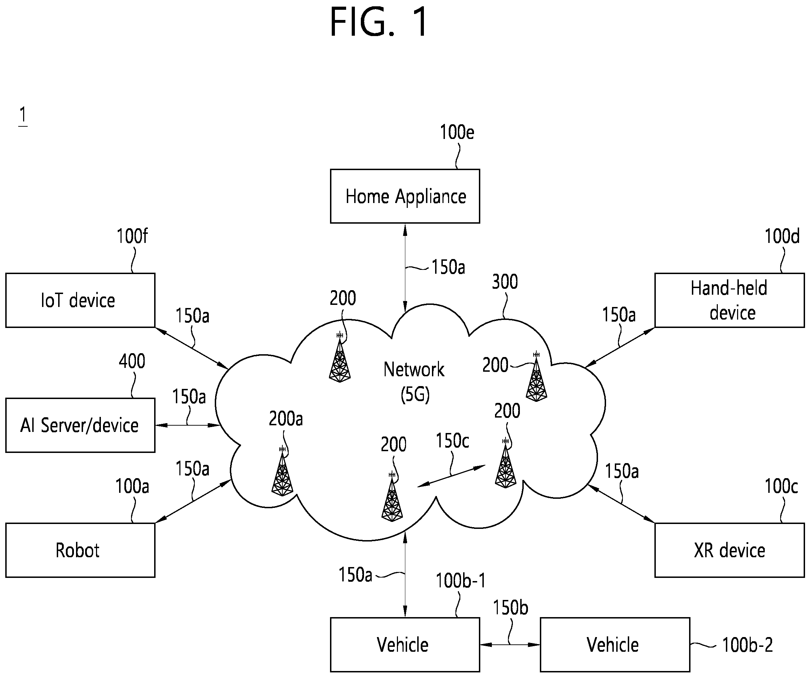

**FIG. 1** **shows an example of a communication system to which implementations of the present disclosure is applied.**

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

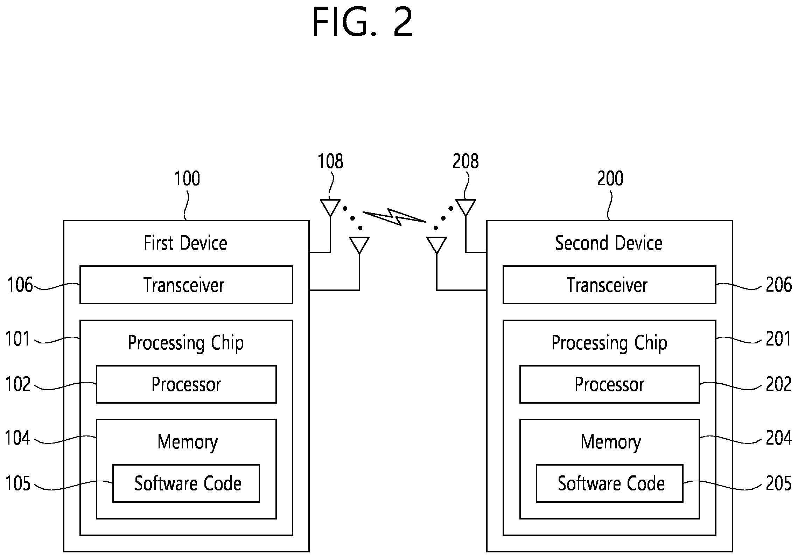

**FIG. 2** **shows an example of wireless devices to which implementations of the present disclosure is applied.**

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor.

The one or more memories 104 and 204 may be connected to the one or more processors 102 and 202 and store various types of data, signals, messages, information, programs, code, instructions, and/or commands. The one or more memories 104 and 204 may be configured by Random Access Memory (RAM), Dynamic RAM (DRAM), Read-Only Memory (ROM), electrically Erasable Programmable Read-Only Memory (EPROM), flash memory, volatile memory, non-volatile memory, hard drive, register, cash memory, computer-readable storage medium, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208. Additionally and/or alternatively, the one or more transceivers 106 and 206 may include one or more antennas 108 and 208. The one or more transceivers 106 and 206 may be adapted to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and down-convert the OFDM signals into OFDM baseband signals by their (analog) oscillators and/or filters under the control of the one or more processors 102 and 202.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in Uplink (UL) and as a receiving device in Downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

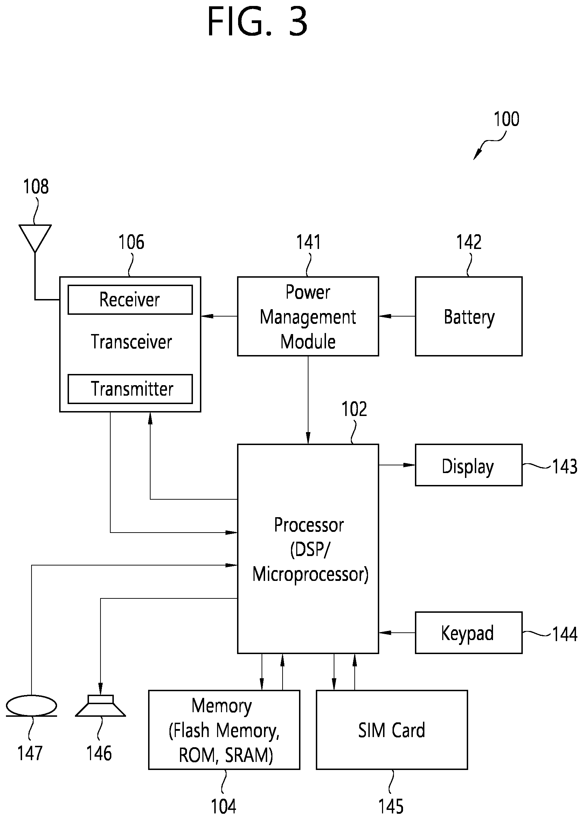

**FIG. 3** **shows an example of UE to which implementations of the present disclosure is applied.**

FIG. 3 shows an example of UE to which implementations of the present disclosure is applied.

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information on many SIM cards.

The speaker 146 outputs sound-related results processed by the processor 102. The microphone 147 receives sound-related inputs to be used by the processor 102.

### <6G System General>

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, and (vii) connected intelligence with machine learning capacity. The vision of the 6G system may include four aspects such as "intelligent connectivity", "deep connectivity", "holographic connectivity" and "ubiquitous connectivity", and the 6G system may satisfy the requirements shown in Table 3 below. That is, Table 3 shows the requirements of the 6G system.

**[Table 3]**

| Per device peak data rate | 1 Tbps |
|---|---|
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

The 6G system may have key factors such as enhanced mobile broadband (eMBB), ultra-reliable low latency communications (URLLC), massive machine type communications (mMTC), AI integrated communication, tactile Internet, high throughput, high network capacity, high energy efficiency, low backhaul and access network congestion and enhanced data security.

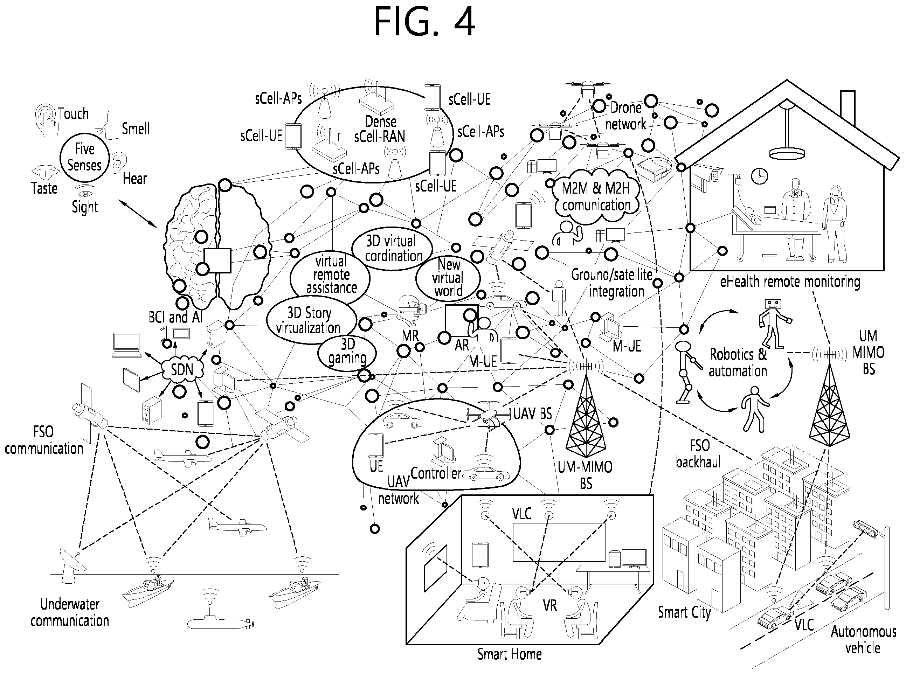

**FIG. 4** **is a diagram showing an example of a communication structure that can be provided in a 6G system.**

The 6G system will have 50 times higher simultaneous wireless communication connectivity than a 5G wireless communication system. URLLC, which is the key feature of 5G, will become more important technology by providing end-to-end latency less than 1 ms in 6G communication. At this time, the 6G system may have much better volumetric spectrum efficiency unlike frequently used domain spectrum efficiency. The 6G system may provide advanced battery technology for energy harvesting and very long battery life and thus mobile devices may not need to be separately charged in the 6G system. In addition, in 6G, new network characteristics may be as follows.
- Satellites integrated network: To provide a global mobile group, 6G will be integrated with satellite. Integrating terrestrial waves, satellites and public networks as one wireless communication system may be very important for 6G.
- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.
- Seamless integration of wireless information and energy transfer: A 6G wireless network may transfer power in order to charge the batteries of devices such as smartphones and sensors. Therefore, wireless information and energy transfer (WIET) will be integrated.
- Ubiquitous super 3-dimemtion connectivity: Access to networks and core network functions of drones and very low earth orbit satellites will establish super 3D connection in 6G ubiquitous.

In the new network characteristics of 6G, several general requirements may be as follows.
- Small cell networks: The idea of a small cell network was introduced in order to improve received signal quality as a result of throughput, energy efficiency and spectrum efficiency improvement in a cellular system. As a result, the small cell network is an essential feature for 5G and beyond 5G (5GB) communication systems. Accordingly, the 6G communication system also employs the characteristics of the small cell network.
- Ultra-dense heterogeneous network: Ultra-dense heterogeneous networks will be another important characteristic of the 6G communication system. A multi-tier network composed of heterogeneous networks improves overall QoS and reduce costs.
- High-capacity backhaul: Backhaul connection is characterized by a high-capacity backhaul network in order to support high-capacity traffic. A high-speed optical fiber and free space optical (FSO) system may be a possible solution for this problem.
- Radar technology integrated with mobile technology: High-precision localization (or location-based service) through communication is one of the functions of the 6G wireless communication system. Accordingly, the radar system will be integrated with the 6G network.
- Softwarization and virtualization: Softwarization and virtualization are two important functions which are the bases of a design process in a 5GB network in order to ensure flexibility, reconfigurability and programmability.

### <Core implementation technology of 6G system>

### Artificial Intelligence

Technology which is most important in the 6G system and will be newly introduced is AI. AI was not involved in the 4G system. A 5G system will support partial or very limited AI. However, the 6G system will support AI for full automation. Advance in machine learning will create a more intelligent network for real-time communication in 6G. When AI is introduced to communication, real-time data transmission may be simplified and improved. AI may determine a method of performing complicated target tasks using countless analysis. That is, AI may increase efficiency and reduce processing delay.

Time-consuming tasks such as handover, network selection or resource scheduling may be immediately performed by using AI. AI may play an important role even in M2M, machine-to-human and human-to-machine communication. In addition, AI may be rapid communication in a brain computer interface (BCI). An AI based communication system may be supported by meta materials, intelligent structures, intelligent networks, intelligent devices, intelligent recognition radios, self-maintaining wireless networks and machine learning.

Recently, attempts have been made to integrate AI with a wireless communication system in the application layer or the network layer, but deep learning have been focused on the wireless resource management and allocation field. However, such studies are gradually developed to the MAC layer and the physical layer, and, particularly, attempts to combine deep learning in the physical layer with wireless transmission are emerging. AI-based physical layer transmission means applying a signal processing and communication mechanism based on an AI driver rather than a traditional communication framework in a fundamental signal processing and communication mechanism. For example, channel coding and decoding based on deep learning, signal estimation and detection based on deep learning, multiple input multiple output (MIMO) mechanisms based on deep learning, resource scheduling and allocation based on AI, etc. may be included.

Machine learning may be used for channel estimation and channel tracking and may be used for power allocation, interference cancellation, etc. in the physical layer of DL. In addition, machine learning may be used for antenna selection, power control, symbol detection, etc. in the MIMO system.

Machine learning refers to a series of operations to train a machine in order to create a machine which can perform tasks which cannot be performed or are difficult to be performed by people. Machine learning requires data and learning models. In machine learning, data learning methods may be roughly divided into three methods, that is, supervised learning, unsupervised learning and reinforcement learning.

Neural network learning is to minimize output error. Neural network learning refers to a process of repeatedly inputting training data to a neural network, calculating the error of the output and target of the neural network for the training data, backpropagating the error of the neural network from the output layer of the neural network to an input layer in order to reduce the error and updating the weight of each node of the neural network.

Supervised learning may use training data labeled with a correct answer and the unsupervised learning may use training data which is not labeled with a correct answer. That is, for example, in case of supervised learning for data classification, training data may be labeled with a category. The labeled training data may be input to the neural network, and the output (category) of the neural network may be compared with the label of the training data, thereby calculating the error. The calculated error is backpropagated from the neural network backward (that is, from the output layer to the input layer), and the connection weight of each node of each layer of the neural network may be updated according to backpropagation. Change in updated connection weight of each node may be determined according to the learning rate. Calculation of the neural network for input data and backpropagation of the error may configure a learning cycle (epoch). The learning data is differently applicable according to the number of repetitions of the learning cycle of the neural network. For example, in the early phase of learning of the neural network, a high learning rate may be used to increase efficiency such that the neural network rapidly ensures a certain level of performance and, in the late phase of learning, a low learning rate may be used to increase accuracy.

The learning method may vary according to the feature of data. For example, for the purpose of accurately predicting data transmitted from a transmitter in a receiver in a communication system, learning may be performed using supervised learning rather than unsupervised learning or reinforcement learning.

The learning model corresponds to the human brain and may be regarded as the most basic linear model. However, a paradigm of machine learning using a neural network structure having high complexity, such as artificial neural networks, as a learning model is referred to as deep learning.

Neural network cores used as a learning method may roughly include a deep neural network (DNN) method, a convolutional deep neural network (CNN) method, a recurrent Boltzmman machine (RNN) method and a spiking neural networks (SNN). Such a learning model is applicable.

### THz (Terahertz) Communication

A data rate may increase by increasing bandwidth. This may be performed by using sub-TH communication with wide bandwidth and applying advanced massive MIMO technology. THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF.

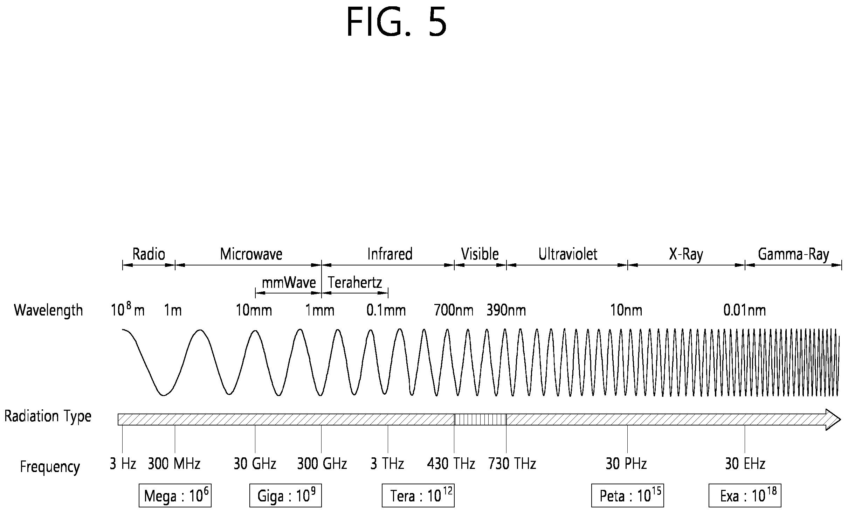

**FIG. 5** **shows an example of an electromagnetic spectrum.**

The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.

### Large-scale MIMO

One of core technologies for improving spectrum efficiency is MIMO technology. When MIMO technology is improved, spectrum efficiency is also improved. Accordingly, massive MIMO technology will be important in the 6G system. Since MIMO technology uses multiple paths, multiplexing technology and beam generation and management technology suitable for the THz band should be significantly considered such that data signals are transmitted through one or more paths.

### Hologram Beamforming

Beamforming is a signal processing procedure that adjusts an antenna array to transmit radio signals in a specific direction. This is a subset of smart antennas or advanced antenna systems. Beamforming technology has several advantages, such as high signal-to-noise ratio, interference prevention and rejection, and high network efficiency. Hologram Beamforming (HBF) is a new beamforming method that differs significantly from MIMO systems because this uses a software-defined antenna. HBF will be a very effective approach for efficient and flexible transmission and reception of signals in multi-antenna communication devices in 6G.

### Optical wireless technology

Optical wireless communication (OWC) is a form of optical communication that uses visible light, infrared light (IR), or ultraviolet light (UV) to transmit signals. OWC that operates in the visible light band (e.g., 390 to 750 nm) is commonly referred to as visible light communication (VLC). VLC implementations may utilize light-emitting diodes (LEDs). VLC can be used in a variety of applications, including wireless local area networks, wireless personal communications networks, and vehicular networks.

VLC has the following advantages over RF-based technologies. First, the spectrum occupied by VLC is free/unlicensed and can provide a wide range of bandwidth (THz-level bandwidth). Second, VLC rarely causes significant interference to other electromagnetic devices; therefore, VLC can be applied in sensitive electromagnetic interference applications such as aircraft and hospitals. Third, VLC has strengths in communications security and privacy. The transmission medium of VLC-based networks, i.e., visible light, cannot penetrate walls and other opaque obstacles. Therefore, the transmission range of VLC can be limited to indoors, which can protect users' privacy and sensitive information. Fourth, VLC can use any light source as a base station, eliminating the need for expensive base stations.

Free-space optical communication (FSO) is an optical communication technology that uses light propagating in free space, such as air, outer space, and vacuum, to wirelessly transmit data for telecommunications or computer networking. FSO can be used as a point-to-point OWC system on the ground. FSOs can operate in the near-infrared frequencies (750-1600 nm). Laser transmitters can be used in FSO implementations, and FSO can provide high data rates (e.g., 10 Gbit/s), offering a potential solution to backhaul bottlenecks.

These OWC technologies are planned for 6G communications, in addition to RF-based communications for any possible device-to-access network. These networks will access network-to-backhaul/fronthaul network connections. OWC technology has already been in use since 4G communication systems, but will be more widely used to meet the needs of 6G communication systems. OWC technologies such as light fidelity, visible light communication, optical camera communication, and FSO communication based on optical bands are already well-known technologies. Communication based on optical wireless technology can provide extremely high data rates, low latency, and secure communication.

Light Detection And Ranging (LiDAR) can also be utilized for ultra-high resolution 3D mapping in 6G communications based on the optical band. LiDAR is a remote sensing method that uses near-infrared, visible, and ultraviolet light to shine a light on an object, and the reflected light is detected by a light sensor to measure distance. LiDAR can be used for fully automated driving of cars.

### FSO Backhaul Network

The characteristics of the transmitter and receiver of the FSO system are similar to those of an optical fiber network. Accordingly, data transmission of the FSO system similar to that of the optical fiber system. Accordingly, FSO may be a good technology for providing backhaul connection in the 6G system along with the optical fiber network. When FSO is used, very long-distance communication is possible even at a distance of 10,000 km or more. FSO supports mass backhaul connections for remote and non-remote areas such as sea, space, underwater and isolated islands. FSO also supports cellular base station connections.

### Non-Terrestrial Networks (NTN)

6G systems will integrate terrestrial and aerial networks to support vertically expanding user communications. 3D BS will be provided via low-orbit satellites and UAVs. Adding a new dimension in terms of altitude and associated degrees of freedom makes 3D connectivity quite different from traditional 2D networks. NR considers Non-Terrestrial Networks (NTNs) as one way to do this. An NTN is a network or network segment that uses RF resources aboard a satellite (or UAS platform). There are two common scenarios for NTNs that provide access to user equipment: transparent payloads and regenerative payloads. The following are the basic elements of an NTN
- One or multiple sat-gateways connecting the NTN to the public data network.
- GEO satellites are fed by one or multiple satellite gateways deployed across the satellite target range (e.g., regional or continental coverage). We assume that a UE in a cell is served by only one sat-gateway.
- Non-GEO satellites that are continuously served by one or multiple satellite gateways at a time. The system shall ensure service and feeder link continuity between successive servicing satellite gateways with a time duration sufficient to allow mobility anchoring and handover to proceed.
- The feeder link or radio link between the satellite gateway and the satellite (or UAS platform).
- Service link or radio link between user equipment and the satellite (or UAS platform).
- Satellite (or UAS platform) capable of implementing transparent or regenerative (including onboard processing) payloads. Satellite (or UAS platform) generated beam A satellite (or UAS platform) generates multiple beams for a given service area, typically based on its field of view. The footprint of a beam is typically elliptical. The field of view of the satellite (or UAS platform) depends on the onboard antenna diagram and the minimum angle of attack.
- Transparent payload: Radio frequency filtering, frequency conversion, and amplification. Therefore, the waveform signal repeated by the payload remains unchanged.
- Regenerative payload: Radio frequency filtering, frequency conversion and amplification, demodulation/decryption, switching and/or routing, and coding/modulation. This is effectively the same as carrying all or part of the base station functions (e.g., gNB) on board a satellite (or UAS platform).
- Optionally, for satellite deployments, an inter-satellite link (ISL). This requires a regenerative payload on the satellite. ISL can operate at RF frequencies or in the optical band.
- The user equipment is serviced by the satellite (or UAS platform) within the targeted coverage area.

Typically, GEO satellites and UAS are used to provide continental, regional, or local services.

Typically, constellations in LEO and MEO are used to provide service in both the Northern and Southern Hemispheres. In some cases, constellations can also provide global coverage, including polar regions. The latter requires proper orbital inclination, sufficient beams generated, and links between satellites.

### Quantum Communication

Quantum communication is a next-generation communication technology that can overcome the limitations of existing communication technologies such as security and ultra-high-speed computation by applying quantum mechanical properties to the field of information and communication. Quantum communication provides a means of generating, transmitting, processing, and storing information that cannot be expressed in the form of 0s and 1s according to the binary bit information used in conventional communication technologies. In conventional communication technologies, wavelengths or amplitudes are used to transmit information between the sender and receiver, but in quantum communication, photons, the smallest unit of light, are used to transmit information between the sender and receiver. In particular, in the case of quantum communication, quantum uncertainty and quantum irreversibility can be used for the polarization or phase difference of photons (light), so quantum communication has the characteristic of being able to communicate with perfect security. Quantum communication may also enable ultrafast communication using quantum entanglement under certain conditions.

### Cell-free Communication

The tight integration of multiple frequencies and heterogeneous communication technologies is crucial for 6G systems. As a result, users will be able to seamlessly move from one network to another without having to create any manual configurations on their devices. The best network is automatically selected from the available communication technologies. This will break the limitations of the cell concept in wireless communications. Currently, the movement of users from one cell to another causes too many handovers in dense networks, resulting in handover failures, handover delays, data loss, and ping-pong effects. 6G cell-free communications will overcome all of these and provide better QoS.

Cell-free communication is defined as "a system in which multiple geographically distributed antennas (APs) cooperatively serve a small number of terminals using the same time/frequency resources with the help of a fronthaul network and a CPU." A single terminal is served by a set of multiple APs, called an AP cluster. There are several ways to form AP clusters, among which the method of organizing AP clusters with APs that can significantly contribute to improving the reception performance of a terminal is called the terminal-centric clustering method, and the configuration is dynamically updated as the terminal moves. This device-centric AP clustering technique ensures that the device is always at the center of the AP cluster and is therefore immune to inter-cluster interference that can occur when a device is located at the boundary of an AP cluster. This cell-free communication will be achieved through multi-connectivity and multi-tier hybrid technologies and different heterogeneous radios in the device.

### Integration of Wireless Information and Energy Transfer (WIET)

WIET uses the same field and wave as a wireless communication system. In particular, a sensor and a smartphone will be charged using wireless power transfer during communication. WIET is a promising technology for extending the life of battery charging wireless systems. Therefore, devices without batteries will be supported in 6G communication.

### Integration of Wireless Communication and Sensing

An autonomous wireless network is a function for continuously detecting a dynamically changing environment state and exchanging information between different nodes. In 6G, sensing will be tightly integrated with communication to support autonomous systems.

### Integrated Access and Backhaul Network

In 6G, the density of access networks will be enormous. Each access network is connected by optical fiber and backhaul connection such as FSO network. To cope with a very large number of access networks, there will be a tight integration between the access and backhaul networks.

### Big Data Analysis

Big data analysis is a complex process for analyzing various large data sets or big data. This process finds information such as hidden data, unknown correlations, and customer disposition to ensure complete data management. Big data is collected from various sources such as video, social networks, images and sensors. This technology is widely used for processing massive data in the 6G system.

### Reconfigurable Intelligent Metasurface

There has been a large body of research that considers the radio environment as a variable to be optimized along with the transmitter and receiver. The radio environment created by this approach is referred to as a Smart Radio Environment (SRE) or Intelligent Radio Environment (IRE) to emphasize its fundamental difference from past design and optimization criteria. Various terms have been proposed for reconfigurable intelligent antenna (or intelligent reconfigurable antenna technology) technologies to enable SRE, including Reconfigurable Metasurfaces, Smart Large Intelligent Surfaces (SLIS), Large Intelligent Surfaces (LIS), Reconfigurable Intelligent Surface (RIS), and Intelligent Reflecting Surface (IRS).

In the case of THz band signals, there are many shadowed areas caused by obstacles due to the strong straightness of the signal, and RIS technology is important to expand the communication area by installing RIS near these shadowed areas to enhance communication stability and provide additional value-added services. RIS is an artificial surface made of electromagnetic materials that can alter the propagation of incoming and outgoing radio waves. Although RIS can be seen as an extension of massive MIMO, it has a different array structure and operating mechanism than massive MIMO. RIS has the advantage of low power consumption because it operates as a reconfigurable reflector with passive elements, i.e., it only passively reflects signals without using active RF chains. Furthermore, each of the passive reflectors in the RIS must independently adjust the phase shift of the incoming signal, which can be advantageous for the wireless communication channel. By properly adjusting the phase shift through the RIS controller, the reflected signals can be gathered at the target receiver to boost the received signal power.

In addition to reflecting radio signals, there are also RISs that can tune transmission and refractive properties, and these RISs are often used for outdoor to indoor (O2I) applications. Recently, STAR-RIS (Simultaneous Transmission and Reflection RIS), which provides transmission at the same time as reflection, has also been actively researched.

### Metaverse

Metaverse is a combination of the words "meta" meaning virtual, transcendent, and "universe" meaning space. Generally speaking, the term is used to describe a three-dimensional virtual space in which social and economic activities are the same as in the real world.

Extended Reality (XR), a key technology that enables the metaverse, is the fusion of the virtual and the real, which can extend the experience of reality and provide a unique immersive experience. The high bandwidth and low latency of 6G networks will enable users to experience more immersive virtual reality (VR) and augmented reality (AR) experiences.

### Autonomous Driving (Self-driving)

For fully autonomous driving, vehicles need to communicate with each other to alert each other to dangerous situations, or with infrastructure such as parking lots and traffic lights to check information such as the location of parking information and signal change times. Vehicle-to-Everything (V2X), a key element in building an autonomous driving infrastructure, is a technology that enables vehicles to communicate and share information with various elements on the road, such as vehicle-to-vehicle (V2V) and vehicle-to-infrastructure (V2I), in order to drive autonomously.

In order to maximize the performance of autonomous driving and ensure high safety, fast transmission speeds and low latency technologies are essential. In addition, in the future, autonomous driving will go beyond delivering warnings and guidance messages to the driver to actively intervene in the operation of the vehicle and directly control the vehicle in dangerous situations, and the amount of information that needs to be transmitted and received will be enormous, so 6G is expected to maximize autonomous driving with faster transmission speeds and lower latency than 5G.

### Unmanned Aerial Vehicle (UAV)

An unmanned aerial vehicle (UAV) or drone will be an important factor in 6G wireless communication. In most cases, a high-speed data wireless connection is provided using UAV technology. A base station entity is installed in the UAV to provide cellular connectivity. UAVs have certain features, which are not found in fixed base station infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communications. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.

### Block-chain

A blockchain will be important technology for managing large amounts of data in future communication systems. The blockchain is a form of distributed ledger technology, and distributed ledger is a database distributed across numerous nodes or computing devices. Each node duplicates and stores the same copy of the ledger. The blockchain is managed through a peer-to-peer (P2P) network. This may exist without being managed by a centralized institution or server. Blockchain data is collected together and organized into blocks. The blocks are connected to each other and protected using encryption. The blockchain completely complements large-scale IoT through improved interoperability, security, privacy, stability and scalability. Accordingly, the blockchain technology provides several functions such as interoperability between devices, high-capacity data traceability, autonomous interaction of different IoT systems, and large-scale connection stability of 6G communication systems.

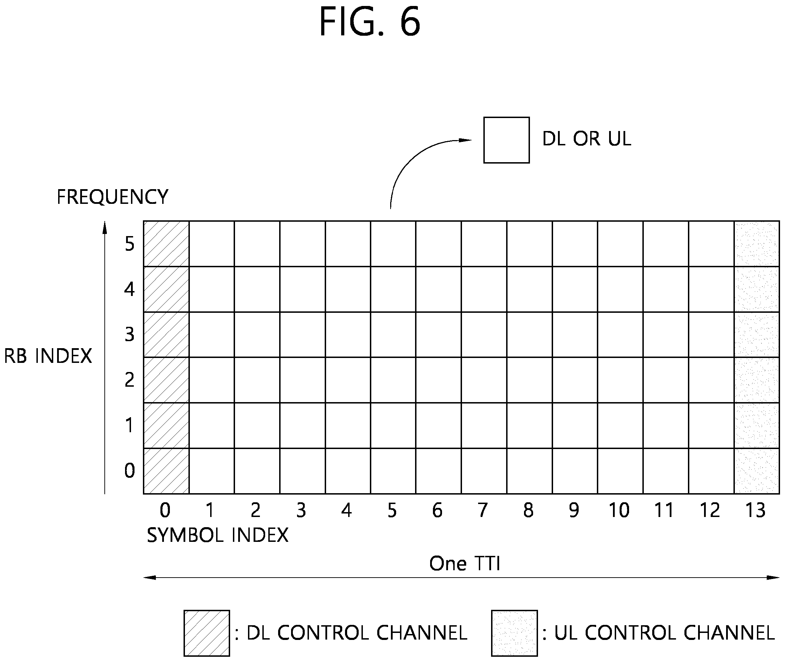

**FIG. 6** **shows an example of subframe types in NR.**

The TTI (transmission time interval) illustrated in FIG. 6 may be called a subframe or slot for NR (or new RAT). The subframe (or slot) of FIG. 6 may be used in a TDD system of NR (or new RAT) to minimize data transmission delay. As illustrated in FIG. 4, the subframe (or slot) includes 14 symbols, similar to the current subframe. The symbols in the front of the subframe (or slot) may be used for a DL control channel, and the symbols in the back of the subframe (or slot) may be used for a UL control channel. The remaining symbols may be used for DL data transmission or UL data transmission. According to this subframe (or slot) structure, downlink transmission and uplink transmission may be sequentially performed in one subframe (or slot). Therefore, downlink data may be received within a subframe (or slot), and an uplink acknowledgement (ACK/NACK) may be transmitted within the subframe (or slot).

The structure of such subframes (or slots) may be called a self-contained subframe (or slot). Using such a structure of subframes (or slots) has the advantage that the time taken to retransmit data in which a reception error has occurred can be reduced, thereby minimizing the final data transmission waiting time. In such a self-contained subframe (or slot) structure, a time gap may be required during a transition from a transmission mode to a reception mode or from a reception mode to a transmission mode. For this purpose, some OFDM symbols when switching from DL to UL in the subframe structure can be set as a guard period (GP).

### <NR to SS block>

SS block (SS / PBCH block: SSB) include information necessary for the terminal to perform initial access in 5G NR, that is, a physical broadcast channel (PBCH) including a master information block (MIB) and a synchronization signal (Synchronization Signal: SS) (PSS and SSS).

In addition, a plurality of SSBs may be bundled to define an SS burst, and a plurality of SS bursts may be bundled to define an SS burst set. It is assumed that each SSB is beamformed in a specific direction, and several SSBs in the SS burst set are designed to support terminals existing in different directions, respectively.

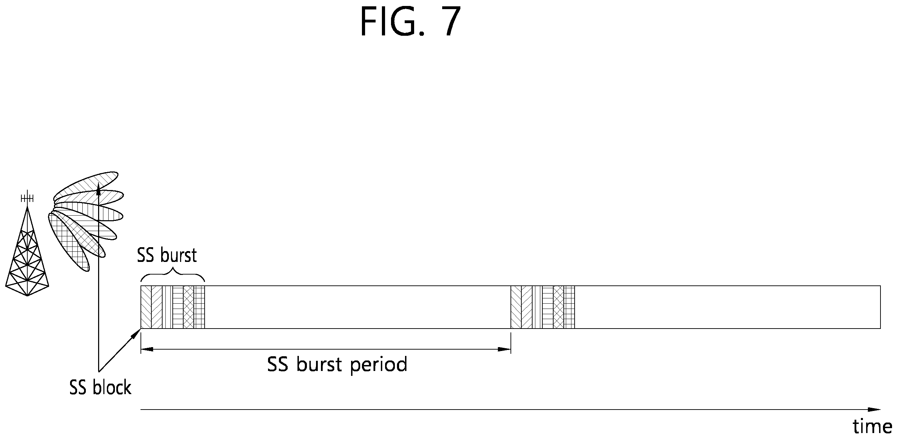

**FIG. 7** **is an exemplary diagram illustrating an example of an SS block in NR.**

Referring to FIG. 7, the SS burst is transmitted every predetermined period. Accordingly, the terminal receives the SS block, and performs cell detection and measurement.

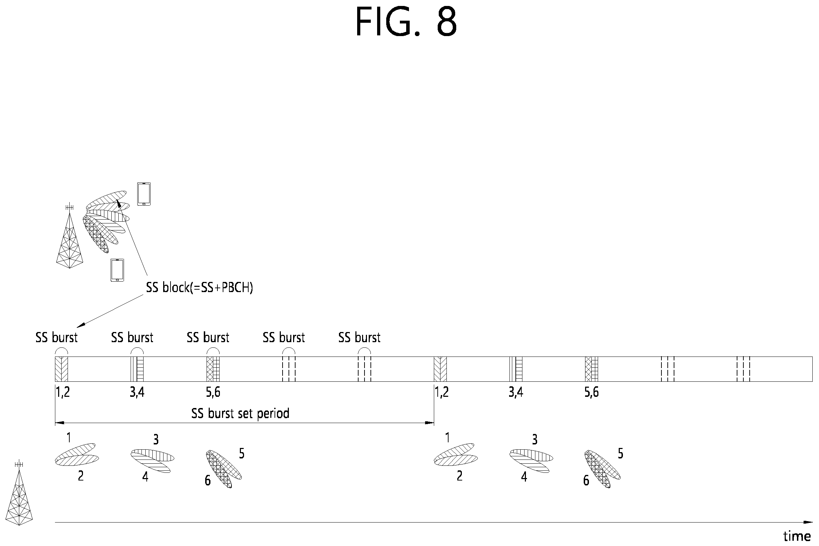

Meanwhile, in 5G NR, beam sweeping is performed for SS. This will be described with reference to FIG. 8.

**FIG. 8** **is an exemplary diagram illustrating an example of beam sweeping in NR.**

The base station transmits each SS block in the SS burst while performing beam sweeping according to time. In this case, several SS blocks in the SS burst set are transmitted to support terminals existing in different directions, respectively.

### < synchronization in sidelink communication >

### 1. Introduction

The conditions in this section are applicable to UEs capable of V2X sidelink communication when:
- GNSS is used as the synchronization reference source;
- NR Cell is used as the synchronization reference source;
- EUTRAN Cell is used as the synchronization reference source;
- SyncRef UE is used as the synchronization reference source.

### 2. Initiation/Cease of SLSS transmissions with NR cell as synchronization reference source

The requirements apply when the NR Cell is used as synchronization reference source and when the UE is
- out of coverage on the V2X NR sidelink carrier and in-coverage with a serving cell on a NR non-V2X sidelink carrier, or
- in coverage with a serving cell on a NR V2X sidelink carrier,

networkControlledSyncTx is not configured; and syncTxThreshIC is included in SystemInformationBlockType12.

The UE shall be capable of measuring the RSRP of the cell used as synchronization reference source to evaluate to initiate/cease SLSS transmissions within T_{evaluate,SLSS}
where,
- T_{evaluate,SLSS} is as specified in Table 4 when UE performs SSB based measurements without measurement gaps.
- T_{evaluate,SLSS} is as specified in Table 5 when UE performs SSB based measurements with measurement gaps.

**[Table 4]**

| DRX cycle in NR cell | | T_{evaluate,SLSS} |
|---|---|---|
| No DRX | | max(400ms, ceil( 2 x 5 x Kₚ) x SMTC period)^{Note 1} |
| DRX cycle≤ 320ms | | max(400ms, ceil(1.5 x 2 x 5 x Kₚ) x max(SMTC period, DRX cycle)) |
| DRX cycle>320ms | | ceil( 7 x Kₚ ) x DRX cycle |
| NOTE 1: | If different SMTC periodicities are configured for different cells, the SMTC period in the requirement is the one used by the cell being identified | |

**[Table 5]**

| DRX cycle in NR cell | T_{evaluate,SLSS} |
|---|---|
| No DRX | max(400ms, 2 x 5 x max(MGRP, SMTC period)) x CSSFᵢₙₜᵣₐ |
| DRX cycle≤ 320ms | max(400ms, ceil(2 x 1.5x 5) x max(MGRP, SMTC period,DRX cycle)) x CSSFᵢₙₜᵣₐ |
| DRX cycle>320ms | 7 x max(MGRP, DRX cycle) x CSSFᵢₙₜᵣₐ |

If higher layer filtering is configured, an additional delay in evaluation to initiate/cease SLSS transmissions can be expected. For the NR cell as synchronization reference source:
- SS-RSRP related side conditions for FR1, respectively, for a corresponding Band,
- SS-RSRQ related side conditions for FR1, respectively, for a corresponding Band,
- SS-SINR related side conditions for FR1, respectively, for a corresponding Band,
- SSB_RP and SSB Es/Iot for a corresponding Band.

### 3. Initiation/Cease of SLSS transmissions with EUTRAN cell as synchronization reference source

The requirements apply when the EUTRAN Cell is used as synchronization reference source and when the UE is
- out of coverage on the V2X NR sidelink carrier and in-coverage with a serving cell on a LTE non-V2X sidelink carrier,
   and when the conditions for SLSS transmissions are met; networkControlledSyncTx is not configured; and syncTxThreshIC is included in SystemInformationBlockType28. The UE shall be capable of measuring the RSRP of the cell used as synchronization reference source to evaluate to initiate/cease SLSS transmissions within T_{evaluate,SLSS}
   where,
- T_{evaluate,SLSS} = 0.4 seconds when UE is not configured with DRX.
- T_{evaluate,SLSS} = as specified in Table 6 when UE is configured with DRX.

**[Table 6]**

| DRX cycle length in EUTRAN cell[s] | | T_{evaluate,SLSS} [s] (number of DRX cycles) |
|---|---|---|
| ≤0.04 | | 0.4 (Note 1) |
| 0.04<DRX-cycle≤2.56 | | Note 2 (6) |
| Note1: | Number of DRX cycles depends upon the DRX cycle in use | |
| Note2: | Time depends upon the DRX cycles in use | |

If higher layer filtering is configured, an additional delay in evaluation to initiate/cease SLSS transmissions can be expected. For the cell as synchronization reference source:
- RSRP related side conditions and RSRQ related side conditions for a corresponding Band are fulfilled,
- SCH_RP and SCH Es/Iot for a corresponding Band are fulfilled.

### 4. Initiation/Cease of SLSS transmissions with GNSS as synchronization reference source

The requirements apply when GNSS is used as synchronization reference source and when the UE is
- out of coverage on the V2X sidelink carrier and in-coverage with a serving cell on a non-V2X sidelink carrier, or
- in coverage with a serving cell on a NR V2X sidelink carrier,

and when the conditions for SLSS transmissions are met; networkControlledSyncTx is not configured; and syncTxThreshIC is included in SystemInformationBlockType12 in a NR cell.

When the conditions for SLSS transmissions specified in TS 36.331[16] are met; networkControlledSyncTx is not configured; and syncTxThreshIC is included in SystemInformationBlockType28 in a EUTRAN cell.

The requirements in Clause 2 shall apply if the serving cell is a NR cell.

The requirements in Clause 3 shall apply if the serving cell is a EUTRAN cell.

### 5. Initiation/Cease of SLSS transmissions with SyncRef UE as synchronization reference source

The requirements apply when SyncRef UE is used as synchronization reference source and when the UE is
- in any cell selection state, or
- out of coverage on the V2X sidelink carrier and is associated with a serving cell on a non-V2X sidelink carrier, or
- in coverage with a serving cell on a NR V2X sidelink carrier,

and when the conditions for SLSS transmissions are met and when SyncRef UE is used as synchronization reference source and if syncTxThreshOoC is included in the preconfigured V2X parameters.

The UE shall be capable of measuring the PSBCH-RSRP of the selected SyncRef UE used as synchronization reference source and evaluate it to initiate/cease SLSS transmissions within T_{evaluate,SLSS}, as shown in Table 7.

**[Table 7]**

| SL-DRX cycle^{Note 1} [ms] | | T_{evaluate,SLSS} [ms] |
|---|---|---|
| No SL-DRX | | 4 x S-SSB periods |
| SL-DRX cycle ≤ 160ms | | 4 x S-SSB periods |
| SL-DRX cycle > 160ms | | 4 x SL-DRX cycle |
| Note 1: | If multiple SL-DRX cycles are configured for SL UE, the SL-DRX cycle in the requirement is the shortest one. When the shortest SL-DRX cycle UE used changes, the requirements do not apply to the time of transition. | |

If higher layer filtering for PSBCH-RSRP measurements is pre-configured, an additional delay in evaluation to initiate/cease SLSS transmissions can be expected. For the selected SyncRef UE used to derive transmission timing for V2X sidelink communication:
- PSBCH-RSRP related side conditions for a corresponding Band are fulfilled,
- V2X S-SSB_RP and S-SSB Es/Iot for a corresponding Band are fulfilled.

### < Sidelink measurement >

In Sidelink measurements, there are measurements for PSBCH-RSRP, PSSCH-RSRP, PSCCH-RSRP, and SL RSSI.

### 1. PSBCH-RSRP

PSBCH Reference Signal Received Power (PSBCH-RSRP) is defined as the linear average over the power contributions (in [W]) of the resource elements that carry demodulation reference signals associated with physical sidelink broadcast channel (PSBCH).

For PSBCH-RSRP sidelink secondary synchronization signals in addition to demodulation reference signals for PSBCH may be used. PSBCH-RSRP using sidelink secondary synchronization signals shall be measured by linear averaging over the power contributions of the resource elements that carry corresponding reference signals.

For frequency range 1, the reference point for the PSBCH RSRP shall be the antenna connector of the UE. For frequency range 2, PSBCH-RSRP shall be measured based on the combined signal from antenna elements corresponding to a given receiver branch. For frequency range 1 and 2, if receiver diversity is in use by the UE, the reported PSBCH-RSRP value shall not be lower than the corresponding PSBCH-RSRP of any of the individual receiver branches.

### 2. PSSCH-RSRP

PSSCH Reference Signal Received Power (PSSCH-RSRP) is defined as the linear average over the power contributions (in [W]) of the resource elements of the antenna port(s) that carry demodulation reference signals associated with physical sidelink shared channel (PSSCH), summed over the antenna ports.

Demodulation reference signals transmitted on antenna ports 1000 and 1001 shall be used for PSSCH-RSRP determination if two antenna ports are indicated.

For frequency range 1, the reference point for the PSSCH-RSRP shall be the antenna connector of the UE. For frequency range 2, PSSCH-RSRP shall be measured based on the combined signal from antenna elements corresponding to a given receiver branch. For frequency range 1 and 2, if receiver diversity is in use by the UE, the reported PSSCH-RSRP value shall not be lower than the corresponding PSSCH-RSRP of any of the individual receiver branches.

### 3. PSCCH-RSRP

PSCCH Reference Signal Received Power (PSCCH-RSRP) is defined as the linear average over the power contributions (in [W]) of the resource elements that carry demodulation reference signals associated with physical sidelink control channel (PSCCH).

For frequency range 1, the reference point for the PSCCH-RSRP shall be the antenna connector of the UE. For frequency range 2, PSCCH-RSRP shall be measured based on the combined signal from antenna elements corresponding to a given receiver branch. For frequency range 1 and 2, if receiver diversity is in use by the UE, the reported PSCCH-RSRP value shall not be lower than the corresponding PSCCH-RSRP of any of the individual receiver branches.

### 4. SL RSSI

Sidelink Received Signal Strength Indicator (SL RSSI) is defined as the linear average of the total received power (in [W]) observed in the configured sub-channel in OFDM symbols of a slot configured for PSCCH and PSSCH, starting from the 2nd OFDM symbol.

For frequency range 1, the reference point for the SL RSSI shall be the antenna connector of the UE. For frequency range 2, SL RSSI shall be measured based on the combined signal from antenna elements corresponding to a given receiver branch. For frequency range 1 and 2, if receiver diversity is in use by the UE, the reported SL RSSI value shall not be lower than the corresponding SL RSSI of any of the individual receiver branches.

### < Disclosure of the present specification >

When a terminal supporting sidelink (hereinafter referred to as terminal) supports mmWave (FR2-2), the e-terminal may operate multiple transmission/reception beams to increase coverage and signal strength, thereby supporting a high transmission speed. Since a terminal supporting mmWave forms beams to transmit and receive signals, it may be suitable for unicast, and this specification assumes a unicast environment and describes it. However, the same method may be applied to other cast types. This specification may propose a terminal operation method for synchronization between terminals required when transmitting and receiving sidelink-based signals in the mmWave frequency band.

### I. Initiation/Stop of SLSS Transmission

When the terminal measures the RSRP of the gNB/eNB and the RSRP falls below a certain level, the terminal may start transmitting the SLSS (Sidelink Synchronization Signal).

i) When the UE performs cell selection (any cell selection), ii) When the UE is out of coverage (out of coverage), iii) When the UE is in coverage of a serving cell operating as a sidelink carrier (in coverage), or iv) When the UE measures PSBCH-RSRP for S-SSB transmitted by another SyncRef UE and it falls below a certain level, the UE may start SLSS transmission.

Considering mmWave sidelink, a synchronization reference UE (SyncRef UE) may transmit SLSS based on multiple Tx beams.

A UE receiving SLSS of a SyncRef UE may receive SLSS of a SyncRef UE by assuming that S-SSBs of all Tx beams are transmitted within an S-SSB (Sidelink-Synchronization signal block) periodicity.

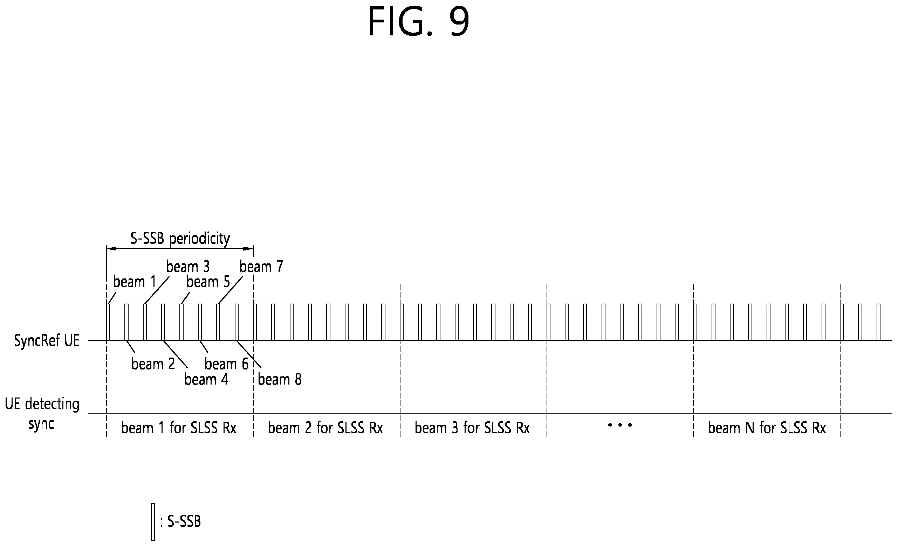

**FIG. 9** **is an example diagram showing an example of a SyncRef UE having 8 Tx beams.**

If the SyncRef UE has 8 Tx beams, the number of S-SSB transmissions within the S-SSB period (160 msec) may be determined based on the number of Tx beams.

A terminal receiving the SLSS of the SyncRef UE may determine to start/stop SLSS transmission within the T_{evaluation,SLSS} time from the time of receiving the SLSS of the SyncRef UE.

For example, if the terminal is currently transmitting SLSS, it may determine to stop SLSS transmission within the T_{evaluation,SLSS} time from the time of receiving the SLSS of the SyncRef UE. Based on the determination, the terminal may stop SLSS transmission.

For example, if the terminal is not currently transmitting SLSS, it may determine to start SLSS transmission within the T_{evaluation,SLSS} time from the time of receiving the SLSS of the SyncRef UE. Based on the determination, the terminal may start SLSS transmission.

T_{evaluation,SLSS} may be increased by N times the conventional value in Table 7 depending on the number of Rx beams (N).

If the terminal is beam paired with SyncRef UE, N may be 1 because Rx beam sweeping is not required. T_{evaluation,SLSS} may be defined as in Table 8.

**[Table 8]**

| SL-DRX cycle^{Note 1} [ms] | | T_{evaluate,SLSS} [ms] |
|---|---|---|
| No SL-DRX | | 4 x N x S-SSB periods |
| SL-DRX cycle ≤ 160ms | | 4 x N x S-SSB periods |
| SL-DRX cycle > 160ms | | 4 x N x SL-DRX cycle |
| Note 1: | If multiple SL-DRX cycles are configured for SL UE, the SL-DRX cycle in the requirement is the shortest one. When the shortest SL-DRX cycle UE used changes, the requirements do not apply to the time of transition. | |
| Note 2: | N=1 If UE has beam paring with SyncRef UE, otherwise, N=8. | |

During the S-SSB cycle, the SyncRef UE may transmit SLSS through all Tx beams. The terminal receiving the SLSS may receive SLSS through one Rx beam during one S-SSB cycle. Therefore, if the terminal receiving the SLSS has 8 Rx beams, the SLSS must be received during 8 S-SSB cycles, so the T_{evaluation,SLSS} may be N times the conventional value in Table 7. If the RSRP level becomes larger than a certain value, the terminal may stop SLSS transmission.

The terminal may stop SLSS transmission after the transmission of S-SSB for all Tx beams is completed.

### II. Selection/Reselection of Synchronization Reference Source

In order to transmit and receive signals, the terminal must be synchronized with the terminal transmitting the signal. To this end, the terminal may perform synchronization through transmission/reception of SLSS.

Depending on what the SLSS transmitting terminal (SyncRef UE) uses as a reference for transmitting the SLSS, the sync detection operation of the terminal receiving the SLSS may vary.

### 1. If the SyncRef UE is synchronized based on GNSS

The SyncRef UE may be synchronized based on the GNSS (Global Navigation Satellite System).

The terminal may need to perform detection for a new SyncRef UE within the T_{detect_SyncRefUE}.

The T_{detect_SyncRefUE} may be determined based on the number of Rx beams (N) of the terminal and the total number of opportunities (k) to monitor the S-SSB based on the S-SSB transmission period of 160 msec. for example, the T_{detect_SyncRefUE} may be defined as 160×N×k (N=1,2,3,..; k=1,2,3 ...).

For example, N may be 4 or 8, and k may be 5 or 10. When N is 8 and k is 10, T_{detect_SyncRefUE} may be up to 12.8s.

The UE may transmit SLSS and receive SLSS from SyncRef UE.

In order to receive SLSS of SyncRef UE, the UE may not transmit SLSS in the SLSS period that it transmits. For example, the UE may receive SLSS of SyncRef UE without transmitting SLSS in the SLSS period that it transmits. In this case, the UE may omit SLSS transmission up to x% during T_{detect_SyncRefUE} in order to receive SLSS from SyncRef UE. For example, x may be 15 or 30.

The UE may transmit SLSS during S-SSB period. In addition, the terminal may receive SLSS from the SyncRef UE.

In order to receive the SLSS of the SyncRef UE, the terminal may drop the transmission of the SLSS during the S-SSB cycle period. For example, the terminal may skip the transmission of the SLSS during the S-SSB cycle period.

Since the SyncRef UE is synchronized based on the GNSS, the terminal may predict when the SLSS of the SyncRef UE will be received. Therefore, during the time that does not correspond to the period in which the SLSS is received from the SyncRef UE in the S-SSB cycle period in which the SLSS transmission is dropped, the terminal may transmit and receive data/control signals to the peer UE. Conversely, in the case described below (when the SyncRef UE is synchronized based on a sync source other than the GNSS), the transmission and reception operation of the data/control signals described above may not be performed.

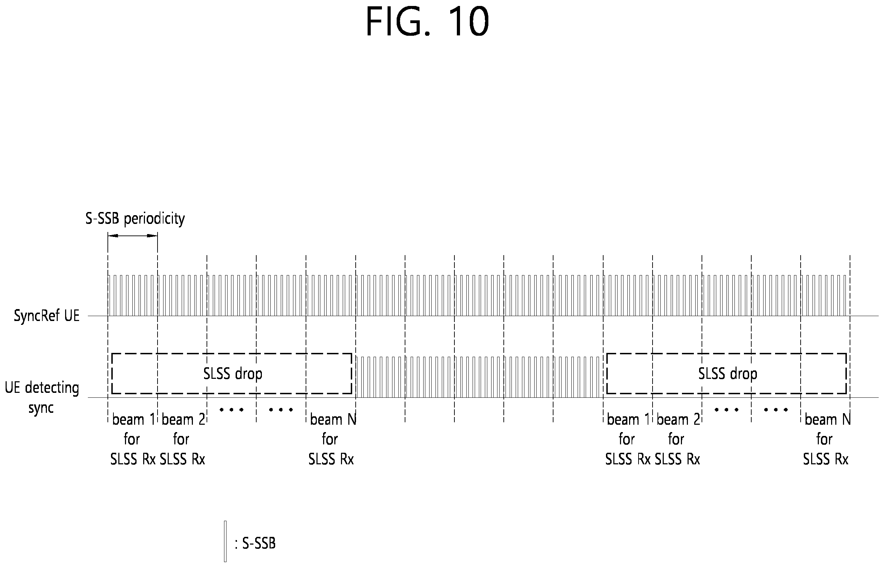

**FIG. 10** **is an exemplary diagram illustrating an example of an embodiment of the present specification.**

The UE detecting sync may transmit SLSS.

The SyncRef UE may transmit SLSS via S-SSB.

The UE detecting sync may receive SLSS from SyncRef UE at the time without performing SLSS transmission (SLSS drop).

As shown in FIG. 10, when the UE omits SLSS transmission (SLSS drop), the UE may drop all SLSS transmissions while considering all Rx beams.

The UE may drop SLSS transmission during 'number of Rx beams * S-SSB cycle' in order to receive SLSS from SyncRef UE via all Rx beams.

The UE may drop SLSS transmission only when SLSS is transmitted from SyncRef UE. Except for the time when the UE drops SLSS transmission, the UE may maintain data/control transmission/reception using other beams. For example, during the time between each time point when SLSS is transmitted from SyncRef UE, the terminal may transmit and receive data/control signals using other beams. During the time when SLSS is not transmitted from SyncRef UE, the terminal may transmit and receive data/control signals using other beams.

The terminal may perform SLSS transmission to other UEs during the S-SSB period. The terminal may drop SLSS transmission only at the time point when SLSS is transmitted from SyncRef UE during the time corresponding to the S-SSB period.

The terminal may drop SLSS for continuous or non-consecutive RX beam index when dropping SLSS.

The SLSS may be dropped by making the number of SLSS samples same according to the Tx beam of the SyncRef UE detected for each Rx beam index. For example, the terminal (UE detecting sync) receives the SLSS of the SyncRef UE through the Rx beam during the time when the SLSS drop is performed, and the number of SLSS samples from the SyncRef UE received through the Rx beam (the number of samples dropped by SLSS for each Rx beam index) may be the same for all Rx beams of the terminal (UE detecting sync).

For example, the terminal (UE detecting sync) may receive the SLSS from the SyncRef UE through the first Rx beam for '3*S-SSB periods'. In this case, the time for the terminal (UE detecting sync) to receive the SLSS from the SyncRef UE through any other Rx beam may be the same as '3*S-SSB periods'. For example, the time for receiving the SLSS from the SyncRef UE through each Rx beam may be the same.

### 2. If SyncRef UE is synchronized based on a Sync source other than GNSS

In this case, the terminal may have to perform detection of the new SyncRef UE within T_{detect_SyncRefUE}.

In this case, the terminal may not know when the SLSS of the SyncRef UE is transmitted.

T_{detect_SyncRefUE} may be determined based on the number of Rx beams (N) of the terminal and the total number of opportunities (k) to monitor the S-SSB based on the S-SSB transmission period of 160msec. for example, T_{detect_SyncRef UE} may be defined as 160×N×k (N=1,2,3 ... ; k=1,2,3 ...).

For example, N may be 4 or 8, and k may be 10 or 20. When N is 8 and k is 00, T_{detect_SyncRefUE} may be up to 25.6s.

In order to receive SLSS of SyncRef UE, the UE may not transmit SLSS in the SLSS period that it transmits. For example, the UE may receive SLSS of SyncRef UE without transmitting SLSS in the SLSS period that it transmits. In this case, the UE may omit SLSS transmission up to x% during T_{detect_SyncRefUE} in order to receive SLSS from SyncRef UE. For example, x may be 15 or 30.

UE (UE detecting sync) may transmit SLSS.

SyncRef UE may transmit SLSS through S-SSB.

The UE detecting sync may not perform SLSS transmission (SLSS drop) and may receive SLSS from the SyncRef UE at that time.

As shown in FIG. 10, when the UE skips SLSS transmission (SLSS drop), the UE may drop all SLSS transmissions while considering all Rx beams.

If the SyncRef UE is synchronized based on a Sync source other than GNSS, the slot boundary may not match when the UE detecting sync receives SNSS from the SyncRef UE. Therefore, the UE may also drop reception of data/control through slots before and after the slot in which the S-SSB is received.

If the SyncRef UE is synchronized based on a Sync source other than GNSS, the UE may not know at what point in time the SLSS of the SyncRef UE is transmitted. Therefore, the UE may drop reception of data/control for all times within the S-SSB cycle. For example, even during the time between each time point when SLSS is transmitted from the SyncRef UE in the S-SSB cycle period (e.g., 160 msec), the UE may drop reception of data/control signals. Even during the time when SLSS is not transmitted from the SyncRef UE, the UE may drop data/control signals because it cannot know at what time point the SLSS of the SyncRef UE is transmitted.

The UE may perform SLSS transmission to other UEs during the S-SSB cycle. The UE may drop SLSS transmission for the entire time corresponding to the S-SSB cycle.

In addition, the UE may have to maintain a specific Rx beam during the S-SSB cycle. In this case, the UE may also drop reception of data/control during the corresponding period of the S-SSB cycle.

To prevent such drops, the terminal may set a period for sync detection and operate by setting scheduling restrictions for data/control during that period.

### III. Selecting/Reselecting SyncRef UE as a Synchronization Reference Source

If the UE cannot use GNSS or gNB/eNB as a synchronization reference source, the UE may find another SyncRef UE. For this purpose, the UE may detect the SLSS signal of another SyncRef UE.

If the SyncRef UE is synchronized based on GNSS, the UE may know the SLSS transmission location (timing) of the SyncRef UE and may detect the SLSS at that location.

If the SyncRef UE is synchronized based on a sync source other than GNSS, the UE does not know the SLSS transmission location (timing) of the SyncRef UE and therefore may attempt to detect the SLSS for all times within the S-SSB cycle.

The UE may measure the PSBCH-RSRP for the SyncRef UEs that detected the SLSS and select or reselect the SyncRef UE with the higher PSBCH-RSRP as the synchronization reference source.

The terminal may measure signal levels such as RSRP/RSRQ while performing sync detection. After sync detection is completed, the terminal may transmit M best Tx beam indices (e.g., M=1,2,3...) to the SyncRef UE. The M best Tx beam indices may be utilized when beam management with the SyncRef UE is performed.

The drawings below are created to illustrate specific examples of the present specification. The names of specific devices or names of specific signals/messages/fields depicted in the drawings are presented as examples, and therefore the technical features of the present specification are not limited to the specific names used in the drawings below.

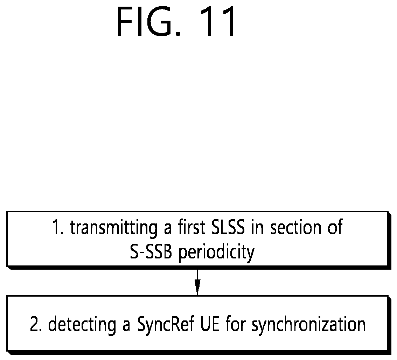

**FIG. 11** **shows the procedure of the UE for the disclosure of this specification.**
1. The UE may transmit a first SLSS (Sidelink Synchronization Signal) in section of S-SSB (Sidelink Synchronization Signal Block) periodicity.
2. The UE may detect a SyncRef UE for synchronization.

The step of detecting the SyncRef UE may comprise: receiving a second SLSS in reception section from the SyncRef UE.

Based on the section of S-SSB periodicity is overlapped with the reception section, the UE may skip to transmit the first SLSS.

The step of receiving the second SLSS comprises: receiving the second SLSS via a first Rx beam; and receiving the second SLSS via a second Rx beam.

The time at which the step of receiving the second SLSS via the first Rx beam may be performed is the same time as the time at which the step of receiving the second SLSS via the second Rx beam is performed.

The UE may perform transmission and reception of data or control signal with another UE during a time other than the reception section in the section of S-SSB periodicity.

The UE may perform transmission and reception of data or control signal with another UE.

Based on the UE not being synchronized with GNSS (Global Navigation. Satellite System), the UE may skip to perform the transmission and the reception of data or control signal with the another UE during entire of the section of S-SSB periodicity.

The UE may receive, from an old SyncRef UE, a third SLSS.

The UE may determine to initiate transmission of the first SLSS within an evaluation time T from the time of receiving the third SLSS.

The evaluation time T may be based on the number of Rx beams of the UE.

The step of transmitting the first SLSS may be based on the determining to initiate transmission of the first SLSS.

The UE may determine to cease transmission of the first SLSS within an evaluation time T from the time of receiving the third SLSS.

The UE may cease transmission of the first SLSS, based on the determining to cease transmission of the first SLSS.

The evaluation time T may be based on the number of Rx beams of the UE.

Hereinafter, an apparatus for performing communication according to some embodiments of the present specification will be described.

For example, the apparatus may include a processor, a transceiver, and a memory.

For example, a processor may be configured to be operably coupled with a memory and a processor.

The processor may perform: transmitting a first SLSS (Sidelink Synchronization Signal) in section of S-SSB (Sidelink Synchronization Signal Block) periodicity; detecting a SyncRef UE for synchronization, wherein the step of detecting the SyncRef UE comprises: receiving a second SLSS in reception section from the SyncRef UE, wherein, based on the section of S-SSB periodicity is overlapped with the reception section, the UE skips to transmit the first SLSS.

Hereinafter, a processor for providing communication according to some embodiments of the present specification will be described.

The processor is configured to: transmitting a first SLSS (Sidelink Synchronization Signal) in section of S-SSB (Sidelink Synchronization Signal Block) periodicity; detecting a SyncRef UE for synchronization, wherein the step of detecting the SyncRef UE comprises: receiving a second SLSS in reception section from the SyncRef UE, wherein, based on the section of S-SSB periodicity is overlapped with the reception section, the UE skips to transmit the first SLSS.

Hereinafter, a non-volatile computer readable medium storing one or more instructions for providing multicast service in wireless communication according to some embodiments of the present specification will be described.

According to some embodiments of the present disclosure, the technical features of the present disclosure may be directly implemented as hardware, software executed by a processor, or a combination of the two. For example, in wireless communication, a method performed by a wireless device may be implemented in hardware, software, firmware, or any combination thereof. For example, the software may reside in RAM memory, flash memory, ROM memory, EPROM memory, EEPROM memory, registers, hard disk, removable disk, CD-ROM, or other storage medium.

Some examples of a storage medium are coupled to the processor such that the processor can read information from the storage medium. Alternatively, the storage medium may be integrated into the processor. The processor and storage medium may reside in the ASIC. For another example, a processor and a storage medium may reside as separate components.

Computer-readable media can include tangible and non-volatile computer-readable storage media.

For example, non-volatile computer-readable media may include random access memory (RAM), such as synchronization dynamic random access memory (SDRAM), read-only memory (ROM), or non-volatile random access memory (NVRAM). Read-only memory (EEPROM), flash memory, magnetic or optical data storage media, or other media that can be used to store instructions or data structures or Non-volatile computer readable media may also include combinations of the above.

Further, the methods described herein may be realized at least in part by computer-readable communication media that carry or carry code in the form of instructions or data structures and that can be accessed, read, and/or executed by a computer.

According to some embodiments of the present disclosure, a non-transitory computer-readable medium has one or more instructions stored thereon. The stored one or more instructions may be executed by a processor of the base station.

The stored one or more instructions cause to: transmitting a first SLSS (Sidelink Synchronization Signal) in section of S-SSB (Sidelink Synchronization Signal Block) periodicity; detecting a SyncRef UE for synchronization, wherein the step of detecting the SyncRef UE comprises: receiving a second SLSS in reception section from the SyncRef UE, wherein, based on the section of S-SSB periodicity is overlapped with the reception section, the UE skips to transmit the first SLSS.

The present specification may have various effects.

For example, efficient measurements for sidelink communication can be performed in FR2-2.

Effects that can be obtained through specific examples of the present specification are not limited to the effects listed above. For example, various technical effects that a person having ordinary skill in the related art can understand or derive from this specification may exist. Accordingly, the specific effects of the present specification are not limited to those explicitly described herein, and may include various effects that can be understood or derived from the technical characteristics of the present specification.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method. Other implementations are within the scope of the following claims.

## Claims

1. A method for performing communication, performed by a UE (User Equipment), comprising:
transmitting a first SLSS (Sidelink Synchronization Signal) in section of S-SSB (Sidelink Synchronization Signal Block) periodicity;
detecting a SyncRef UE for synchronization,
wherein the step of detecting the SyncRef UE comprises: receiving a second SLSS in reception section from the SyncRef UE,
wherein, based on the section of S-SSB periodicity is overlapped with the reception section, the UE skips to transmit the first SLSS.

2. The method of claim 1,
wherein the step of receiving the second SLSS comprises:
receiving the second SLSS via a first Rx beam; and
receiving the second SLSS via a second Rx beam.

3. The method of claim 1,
wherein the time at which the step of receiving the second SLSS via the first Rx beam is performed is the same time as the time at which the step of receiving the second SLSS via the second Rx beam is performed.

4. The method of claim 1, further comprising:
performing transmission and reception of data or control signal with another UE during a time other than the reception section in the section of S-SSB periodicity.

5. The method of claim 1, further comprising:
performing transmission and reception of data or control signal with another UE,
wherein, based on the UE not being synchronized with GNSS (Global Navigation Satellite System), the UE skips to perform the transmission and the reception of data or control signal with the another UE during entire of the section of S-SSB periodicity.

6. The method of claim 1, further comprising:
receiving, from an old SyncRef UE, a third SLSS;
determining to initiate transmission of the first SLSS within an evaluation time T from the time of receiving the third SLSS,
wherein the evaluation time T is based on the number of Rx beams of the UE,
wherein the step of transmitting the first SLSS is based on the determining to initiate transmission of the first SLSS.

7. The method of claim 1, further comprising:
determining to cease transmission of the first SLSS within an evaluation time T from the time of receiving the third SLSS;
ceasing transmission of the first SLSS, based on the determining to cease transmission of the first SLSS,
wherein the evaluation time T is based on the number of Rx beams of the UE.

8. A UE (User Equipment), to perform communication, comprising:
a transceiver; and
a processor,
wherein the processor performs operation comprising:
transmitting a first SLSS (Sidelink Synchronization Signal) in section of S-SSB (Sidelink Synchronization Signal Block) periodicity;
detecting a SyncRef UE for synchronization,
wherein the step of detecting the SyncRef UE comprises: receiving a second SLSS in reception section from the SyncRef UE,
wherein, based on the section of S-SSB periodicity is overlapped with the reception section, the UE skips to transmit the first SLSS.

9. The UE of claim 8,
wherein the step of receiving the second SLSS comprises:
receiving the second SLSS via a first Rx beam; and
receiving the second SLSS via a second Rx beam.

10. The method of claim 9,
wherein the time at which the step of receiving the second SLSS via the first Rx beam is performed is the same time as the time at which the step of receiving the second SLSS via the second Rx beam is performed.

11. The method of claim 8, wherein the operation further comprises:
performing transmission and reception of data or control signal with another UE during a time other than the reception section in the section of S-SSB periodicity.

12. The method of claim 8, wherein the operation further comprises:
performing transmission and reception of data or control signal with another UE,
wherein, based on the UE not being synchronized with GNSS (Global Navigation Satellite System), the UE skips to perform the transmission and the reception of data or control signal with the another UE during entire of the section of S-SSB periodicity.

13. The method of claim 8, wherein the operation further comprises:
receiving, from an old SyncRef UE, a third SLSS;
determining to initiate transmission of the first SLSS within an evaluation time T from the time of receiving the third SLSS,
wherein the evaluation time T is based on the number of Rx beams of the UE,
wherein the step of transmitting the first SLSS is based on the determining to initiate transmission of the first SLSS.

14. The method of claim 8, wherein the operation further comprises:
determining to cease transmission of the first SLSS within an evaluation time T from the time of receiving the third SLSS;
ceasing transmission of the first SLSS, based on the determining to cease transmission of the first SLSS,
wherein the evaluation time T is based on the number of Rx beams of the UE.

15. An apparatus in mobile communication, comprising:
at least one processor; and
at least one memory storing instructions and operably electrically connectable with the at least one processor,
wherein, based on the instructions being operated by the at least one processor, the instructions perform operation comprising:
transmitting a first SLSS (Sidelink Synchronization Signal) in section of S-SSB (Sidelink Synchronization Signal Block) periodicity;
detecting a SyncRef UE for synchronization,
wherein the step of detecting the SyncRef UE comprises: receiving a second SLSS in reception section from the SyncRef UE,
wherein, based on the section of S-SSB periodicity is overlapped with the reception section, the apparatus skips to transmit the first SLSS.

16. A non-volatile computer readable storage medium having recorded instructions,
wherein the instructions, based on being executed by one or more processors, cause the one or more processors to perform operation comprising:
transmitting a first SLSS (Sidelink Synchronization Signal) in section of S-SSB (Sidelink Synchronization Signal Block) periodicity;
detecting a SyncRef UE for synchronization,
wherein the step of detecting the SyncRef UE comprises: receiving a second SLSS in reception section from the SyncRef UE,
wherein, based on the section of S-SSB periodicity is overlapped with the reception section, a UE including the non-volatile computer readable storage medium skips to transmit the first SLSS.
